# EUROPEAN PATENT APPLICATION

(11) **EP 4 738 911 A1**
(43) Date of publication of application: **06.05.2026**
(21) Application number: 24832374.3
(22) Date of filing: 21.06.2024
(51) Int. Cl.: H04W 24/02, H04W 28/086, H04W 28/08, H04W 76/22, H04L 41/0897, H04W 88/08, H04W 40/34

(54) **METHOD AND ELECTRONIC DEVICE FOR PERFORMING MIGRATION OPERATION FOR DISTRIBUTED UNIT (DU) SCALING**

(30) Priority: 29.06.2023 KR 20230084484; 30.08.2023 KR 20230114605
(71) Applicant: Samsung Electronics Co., Ltd., Suwon-si, Gyeonggi-do 16677 (KR)
(72) Inventor: PARK, Hanjung, Suwon-si, Gyeonggi-do 16677 (KR); HONG, Youngki, Suwon-si, Gyeonggi-do 16677 (KR); PARK, Seonjun, Suwon-si, Gyeonggi-do 16677 (KR); AHN, Heungseop, Suwon-si, Gyeonggi-do 16677 (KR)
(74) Representative: Appleyard Lees IP LLP
(86) International application number: PCT/KR2024/008643
(87) International publication number: WO 2025/005595

(57) **Abstract**

A method performed by an electronic device may include migrating a cell context for a target cell included in a first distributed unit (DU) to a second DU, configuring a connection between an RLC layer of the first DU and a MAC layer of the second DU for the target cell, migrating a user equipment (UE) context for a target UE, among UE contexts for a plurality of UEs associated with the target cell and included in the RLC layer of the first DU, to the RLC layer of the second DU, and switching an F1-U interface for the target UE to the second DU from the first DU and configuring a connection between the RLC layer and the MAC layer in the second DU for the target UE.

## Description

### Technical Field

The present disclosure relates to a method and electronic device for performing a migration operation for distributed unit (DU) scaling.

### Background Art

In communication industries, technologies for a virtualized radio access network (RAN), i.e., vRAN, are growing rapidly. The existing hardware-based RAN requires specific hardware to perform each function for communication, and mobile carriers have needed to build a RAN with hardware components from the same manufacturer because of issues such as hardware compatibility. On the other hand, vRAN is not hardware-based but software-based RAN, and functions for communication of vRAN may be performed with software components. In other words, vRAN has no need for specific hardware to perform functions for communication, and the software components of vRAN may be executed by a universal server device to perform functions for communication. Accordingly, mobile carriers do not depend on products from a single manufacturer but use products from various manufacturers to build vRAN.

### Disclosure of Invention

### Solution to Problem

The present disclosure may be implemented in various ways including a method, a system, a device or a computer program stored in a computer-readable storage medium.

In an embodiment of the present disclosure, a method performed by an electronic device may include migrating a cell context for a target cell included in at least one of a radio link control (RLC) layer, a medium access control (MAC) layer or a physical (PHY) layer in a first distributed unit (DU) to at least one of an RLC layer, an MAC layer or a PHY layer in a second DU. In an embodiment of the present disclosure, the method may include configuring a connection between the RLC layer of the first DU and the MAC layer of the second DU for the target cell, and identifying that the target cell is in a state of being available for communication. In an embodiment of the present disclosure, the method may include migrating user equipment (UE) contexts for one or more target UEs among UE contexts for a plurality of UEs associated with the target cell, which are included in the RLC layer of the first DU, to the RLC layer of the second DU. In an embodiment of the present disclosure, the method may include switching an F1-U interface for the one or more target UEs to the second DU from the first DU, and configuring a connection between the RLC layer and the MAC layer in the second DU for the one or more target UEs.

In an embodiment of the present disclosure, a program for causing a computer to perform the method may be recorded on a computer-readable recording medium.

In an embodiment of the present disclosure, an electronic device may include a memory storing one or more instructions and at least one processor configured to execute the one or more instructions stored in the memory. In an embodiment of the present disclosure, the at least one processor may execute the one or more instructions to migrate a cell context for a target cell included in at least one of an RLC layer, an MAC layer or a PHY layer in a first DU to at least one of an RLC layer, an MAC layer or a PHY layer in a second DU. In an embodiment of the present disclosure, the at least one processor may execute the one or more instructions to configure a connection between the RLC layer of the first DU and the MAC layer of the second DU for the target cell, and identify that the target cell is in a state of being available for communication. In an embodiment of the present disclosure, the at least one processor may execute the one or more instructions to migrate UE contexts for one or more target UEs among UE contexts for a plurality of UEs associated with the target cell, which are included in the RLC layer of the first DU, to the RLC layer of the second DU. In an embodiment of the present disclosure, the at least one processor may execute the one or more instructions to switch an F1-U interface for the one or more target UEs to the second DU from the first DU, and configure a connection between the RLC layer and the MAC layer in the second DU for the one or more target UEs.

### Brief Description of Drawings

FIG. 1 is a diagram illustrating an example of a wireless communication system architecture according to an embodiment of the present disclosure.
FIG. 2 is a diagram illustrating an example of performing DU scaling in a radio access network (RAN), according to an embodiment of the present disclosure.
FIG. 3 is a diagram illustrating an example of performing DU scaling-out in a RAN, according to an embodiment of the present disclosure.
FIG. 4 is a diagram illustrating an example in which an electronic device determines scaling-out for a first DU, according to an embodiment of the present disclosure.
FIGS. 5 to 7 are diagrams illustrating examples in which an electronic device performs cell migration for DU scaling-out, according to an embodiment of the present disclosure.
FIG. 8 is a diagram illustrating an example of performing DU scaling-in in a RAN, according to an embodiment of the present disclosure.
FIG. 9 is a flowchart illustrating an example of a method of performing a cell migration operation for a DU, according to an embodiment of the present disclosure.
FIG. 10 is a flowchart illustrating an example of a method of performing a cell migration operation for a DU, according to an embodiment of the present disclosure.
FIG. 11 is a diagram illustrating an example of an electronic device for performing a cell migration operation for a DU, according to an embodiment of the present disclosure.

### Mode for the Invention

Various modifications may be made to embodiments of the present disclosure, which will be described more fully hereinafter with reference to the accompanying drawings. The present disclosure should be understood as not limited to particular embodiments but including all the modifications, equivalents and replacements which belong to technical scope and ideas of the present disclosure.

A detailed description of a related well-known technology that is likely to unnecessarily obscure the gist will be omitted herein. Ordinal numbers (e.g., first, second, etc.) as herein used are to distinguish components from one another. Unless the context clearly indicates otherwise, the singular forms "a", "an", and "the" are to be understood to include plural objects.

It is to be understood that blocks of each flowchart and combinations of flowcharts may be performed by one or more computer programs including computer-executable instructions. The one or more computer programs may be stored all in a single memory or may be distributed in many different memories.

All functions or operations as described in the specification may be processed by a single processor or a combination of processors. The single processor or the combination of processors are circuitries for performing processing, which may include an application processor (AP), a communication processor (CP), a graphical processing unit (GPU), a neural processing unit (NPU), a microprocessor unit (MPU), a system on chip (SoC), an integrated chip (IC), etc.

An embodiment of the present disclosure will now be described in detail with reference to accompanying drawings so as to be readily practiced by those of ordinary skill in the art. However, the embodiments of the present disclosure may be implemented in many different forms, and not limited thereto as will be discussed herein. Prior to describing the disclosure in detail, the terms used in the specification may be defined or understood as follows.

When one component is "connected" or "coupled" to another component, the one component may be directly connected or coupled to the other component. However, unless otherwise defined, it is also understood that the one component may be indirectly connected or coupled to the other component via another new component. Furthermore, 'connection' may include wireless connection or connection by wire.

Throughout the specification, a component expressed with "~ unit", "~module", or the like may be a combination of two or more components or may be divided by function into two or more. Each of the components may perform its major function and further perform part or all of a function served by another component. In this way, part of a major function served by each component may be dedicated and performed by another component.

Throughout the present disclosure, the expression "at least one of a, b or c" indicates only a, only b, only c, both a and b, both a and c, both b and c, all of a, b, and c, or variations thereof. In the present disclosure, the expression "a or b" may refer to "a", "b", "a and b" or variations thereof. Throughout the present disclosure, the expression "a (or b or c)" may indicate only a, only b, only c, both a and b, both a and c, both b and c, all of a, b, and c, or variations thereof.

In an embodiment of the present disclosure, the term "migrating" may include moving, duplicating, reproducing or synchronizing target information to be migrated included in an arbitrary space to another arbitrary space. In an embodiment of the present disclosure, the term "migrating" may include having the target information to be migrated (e.g., context information), which is included, stored or configured in space A (or device A or module A), included, stored or configured in space B (or device B or module B). In an embodiment of the present disclosure, the term "migrating" may include having the target information to be migrated (e.g., context information), which is included, stored or configured in space A (or device A or module A), included, stored or configured in space B (or device B or module B), and removing, deleting or releasing the target information to be migrated from space A (device A or module A).

In an embodiment of the present disclosure, "cell migration" may include migration of at least one of a context associated with a cell or an interface associated with the cell. For example, "cell migration" may include migration of a cell context. For example, "cell migration" may include migration of a cell context and a user equipment (UE) context for a UE associated with the cell. In an embodiment of the present disclosure, "UE migration" refers to migration on a UE basis, which may include migration of a UE context. In an embodiment of the present disclosure, "UE migration" may include migration of an interface for user data (e.g., F1-U interface).

In an embodiment of the present disclosure, "connection relationship" may include a meaning of "access relationship", "inclusion relationship", "attachment relationship" or "matching relationship". For example, "connected" may include a meaning of "accessing", "included in", "attached" or "matched". In an embodiment of the present disclosure, "connection" may include a meaning of availability of wired/wireless data communication. For example, "A and B being connected" may include a meaning of availability of data communication between A and B, i.e., availability of data transmission/reception with each other.

In an embodiment of the present disclosure, "configuring" may include a meaning of "generating", "activating", "connecting", "establishing" or "initiating".

In an embodiment of the present disclosure, "releasing" may include a meaning of "removing", "deactivating", "interrupting/terminating" or "cutting off".

In an embodiment of the present disclosure, "module A performing operation B" may include "module A directly performing operation B" or "module A controlling module C to perform operation B".

In an embodiment of the present disclosure, "a UE associated with a cell" may include a UE connected to a cell, a UE communicating with an RU including a cell (i.e., transmitting/receiving data), a UE receiving a communication service through a cell, a UE transmitting/receiving data through a cell, a UE connecting to a core network through a cell, a UE included in a range of a cell, a UE requesting a radio resource of a cell, a UE allocated a radio resource of a cell, or the like.

In an embodiment of the present disclosure, "interface" may include a meaning of a module enabling data transmission/reception. In an embodiment of the present disclosure, "interface" may include a meaning of connection relationship. In an embodiment of the present disclosure, "interface" may include a meaning of a data transmit/receive path. In an embodiment of the present disclosure, "establishing an interface between A and B" may include configuring A and B to transmit or receive data to or from each other and to process the received data.

In an embodiment of the present disclosure, "scale-out for a DU" and "scaling-out for a DU" may include adding a new DU to a DU pool including DUs. In an embodiment of the present disclosure, "scale-out for a DU" and "scaling-out for a DU" may include migrating a cell included in a DU to another DU (e.g., the newly added DU).

In an embodiment of the disclosure, "scale-in for a DU" and "scaling-in for a DU" may include removing a DU from the DU pool. In an embodiment of the present disclosure, "scale-in for a DU" and "scaling-in for a DU" may include migrating a cell included in a DU to another DU (e.g., an existing DU).

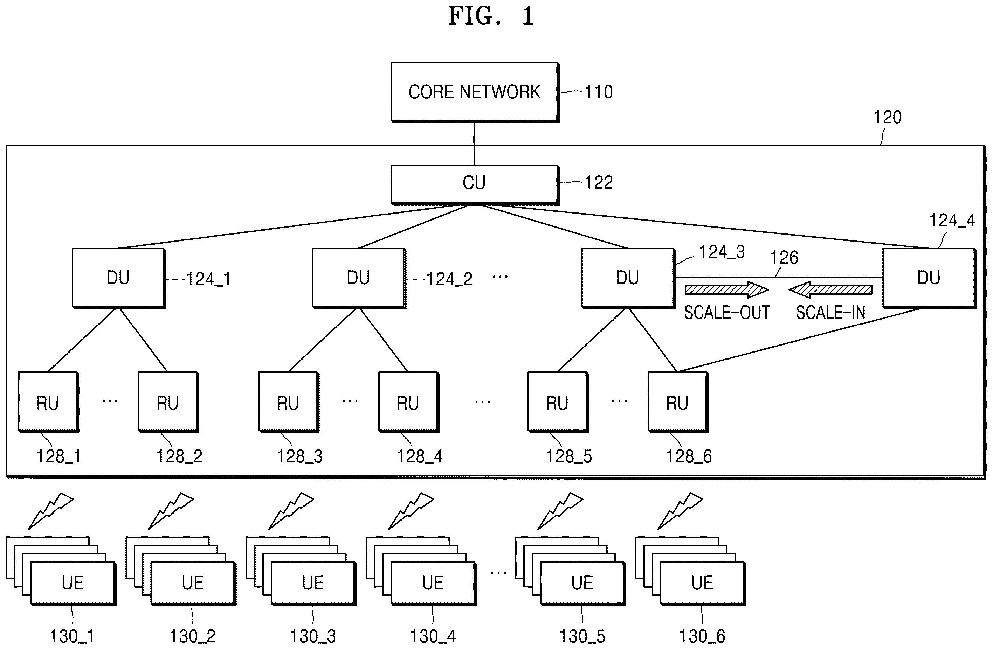

FIG. 1 is a diagram illustrating an example of a wireless communication system architecture, according to an embodiment of the present disclosure.

In an embodiment of the present disclosure, a wireless communication system may include a core network 110 and a radio access network (RAN) 120. The core network 110 may be a platform network including e.g., user authentication information for each mobile carrier and connected by wire through optical cables to servers and systems of various service companies.

In an embodiment of the present disclosure, the RAN 120 may include at least one radio unit (RU) 128_1, 128_2, 128_3, 128_4, 128_5, and 128_6, at least one distributed unit (DU) 124_1, 124_2, 124_3 and 124_4, and a centralized unit (CU) 122. In an embodiment of the present disclosure, the RAN 120 may include a virtualized radio access network (vRAN) system, without being limited thereto. For example, the RAN 120 may include a 5G system (5GS), 4GS, or other wireless communication system, and may refer to a future-developed wireless communication system.

In an embodiment of the present disclosure, the CU 122 may be an entity that performs functions of some of protocol layers of a network. For example, the CU 122 may be an entity that performs network functions of a radio resource control (RRC) layer and a packet data convergence protocol (PDCP) layer, but the functions that may be processed by the CU 122 are not limited to the functions of the aforementioned RRC layer and PDCP layer. For example, the CU 122 may perform functions of setting quality of service (QoS), reordering packets, security setting and processing, etc. For example, the CU 122 may refer to a virtualized CU (vCU) of the vRAN system, but is not limited thereto.

The single CU 122 may be connected to N DUs, where N may be an integer greater than 1. The CU 122 and the DUs 124_1, 124_2, 124_3 and 124_4 may be connected by an interface. For example, the interface between the CU 122 and the DUs 124_1, 124_2, 124_3 and 124_4 may be an F1 interface (or midhaul interface). For example, the F1 interface may include F1-C, an F1 interface of a control plane, and F1-U, an F1 interface of a user plane.

The RAN 120 may include the DU 124_1, the DU 124_2 and the DU 124_3. The DUs 124-1, 124_2 and 124_3 may perform the same function, so the DU 124_3 will now be focused as an example.

In an embodiment of the present disclosure, the DU 124_3 may be an entity that performs functions of some protocol layers of a network other than some other layers performed by the CU 122. For example, the DU 124_3 may be an entity that performs network functions (e.g., baseband functions) of a radio link control (RLC) layer, a medium access control (MAC) layer and a physical (PHY) layer, but functions that may be processed by the DU 124_3 are not limited to the functions of the RLC layer, MAC layer and PHY layer. For example, the DU 124_3 may perform a buffer function, a radio resource scheduling function, a data reprocessing function, etc. For example, the DU 124_3 may be a virtualized DU (vDU) of the vRAN system, but is not limited thereto. For example, the DU 124_3 may correspond to a component module, an arbitrary processing operation unit or arbitrary processing distribution unit, software, etc. For example, the DU 124_3 may correspond to a server.

A single DU may be connected to N RUs, where N may be an integer greater than 1. Referring to FIG. 1, the DU 124_1 may be connected to the RU 128_1, ..., and the RU 128_2, the DU 124_2 may be connected to the RU 128_3, ..., and the RU 128_4, and the DU 124_3 may be connected to the RU 128_5, ..., and the RU 128_6. In an embodiment of the present disclosure, the DU 124_3 and the RUs 128_5 and 128_6 may be connected by an interface. For example, the interface between the DU 124_3 and the RUs 128_5 and 128_6 may be a fronthaul interface.

The RUs 128_1, 128_2, 128_3, 128_4, 128_5 and 128_6 may perform the same function, so the RU 128_6 will now be focused as an example.

In an embodiment of the present disclosure, the RU 128_6 may be an entity that performs some of the functions of the PHY layer other than functions processed by the DU 124_3. For example, the DU 124_3 may perform a function of a high-PHY layer, and the RU 128_6 may perform a function of a low-PHY layer. For example, the RU 128_6 may perform a function of data transmission/reception through an RF antenna.

In the existing RAN system, the DU may be connected one by one to a cell site including one or more RUs, and the throughput of a DU may be determined based on maximum traffic that may flow into the cell site. According to changes in traffic over time, the time at which the maximum traffic occurs is limited (e.g., 17:00 to 21:00), and there may be unused DU resources, i.e., available remaining resources at other times.

A virtualized DU (vDU) pooling technology to cut the one-by-one connection between the existing DU and the cell site (a set of RUs) and pool and virtualize DUs may be applied to a vRAN system according to an embodiment of the present disclosure. In this case, the number of servers required for building the RAN system may be reduced and capital expenditures (CAPEX) may be saved. Furthermore, power consumption may be reduced as compared to the existing RAN system, and the operating expenditure (OPEX) may be saved.

A vCU pooling technology to pool and virtualize CUs may be applied to the vRAN system according to an embodiment of the present disclosure. In this case, the number of servers required for building the RAN system may be reduced and capital expenditures (CAPEX) may be saved. Furthermore, power consumption may be reduced as compared to the existing RAN system, and the operating expenditure (OPEX) may be saved.

In an embodiment of the present disclosure, the RAN 120 may use a vDU scaling method that uses server resources efficiently by dynamically scaling out or scaling in a DU depending on a current traffic condition. In the case of scaling-out, the DU 124_4 may be newly generated in the RAN 120, but is not limited thereto. For example, the DU 124_4 may have existed in the RAN 120. In the case of scaling-in, the DU 124_4 may have existed in the RAN 120.

Hereinafter, the DU 124_3 may be denoted as the first DU 124_3 and the DU 124_4 may be denoted as the second DU 124_4. In FIG. 1, in a case of scale-out, the first DU 124_3 may correspond to a source DU and the second DU 124_4 may correspond to a target DU. In FIG. 1, in a case of scale-in, the first DU 124_3 may correspond to a target DU and the second DU 124_4 may correspond to a source DU. The first DU 124_3 and the second DU 124_4 may be connected by an inter DU interface (Xd interface) 126.

In an embodiment of the present disclosure, the scaling-out may include adding a new DU (e.g., the second DU 124_4) into a DU pool for the CU 122. For example, when an amount of traffic to be processed by the first DU 124_3 included in the DU pool increases, the second DU 124_4 may be added to the DU pool. For example, the adding of the second DU 124_4 to the DU pool may include adding a module corresponding to the second DU 124_4 into the DU pool. For example, the adding of the second DU 124_4 to the DU pool may include initiating an operation of an additional server capable of processing data. When the capacity or capability for processing data of the first DU 124_3 (e.g., the existing server) reaches a limit, the scaling-out may be used to add the second DU 124_4 (a server with similar specifications as a non-limiting example) to the communication system. In this case, a cell whose data is to be processed by the first DU 124_3 may be migrated from the first DU 124_3 to the second DU 124_4, allowing the data of the cell to be processed by the second DU 124_4.

In an embodiment of the present disclosure, scaling-in may include removing the second DU 124_4 included in the DU pool. For example, when the amount of traffic to be processed by DUs included in the DU pool decreases, the second DU 124_4 may be removed from the DU pool. For example, the removing of the second DU 124_4 from the DU pool may include removing a module corresponding to the second DU 124_4. For example, the removing of the second DU 124_4 from the DU pool may include interrupting the operation of a server that is processing the data. Using the scaling-in may reduce the number of servers whose operation is not required, and may save resources. For the scaling-in, a cell whose data is to be processed by the second DU 124_4 may be migrated from the second DU 124_4 to the first DU 124_3, allowing the data of the cell to be processed by the first DU 124_3.

In an embodiment of the present disclosure, apart from the scaling to add or remove the second DU 124_4 to or from the DU pool, the cell whose data is to be processed by the second DU 124_4 may be migrated from the second DU 124_4 to the first DU 124_3 to allow the data of the cell to be processed by the first DU 124_3 or the cell whose data is to be processed by the first DU 124_3 may be migrated from the first DU 124_3 to the second DU 124_4 to allow the data of the cell to be processed by the second DU 124_4. For example, the cell may be migrated from the first DU 124_3 having a large amount of traffic to the second DU 124_4 having a relatively small amount of traffic to allow the data of the cell to be processed by the second DU 124_4.

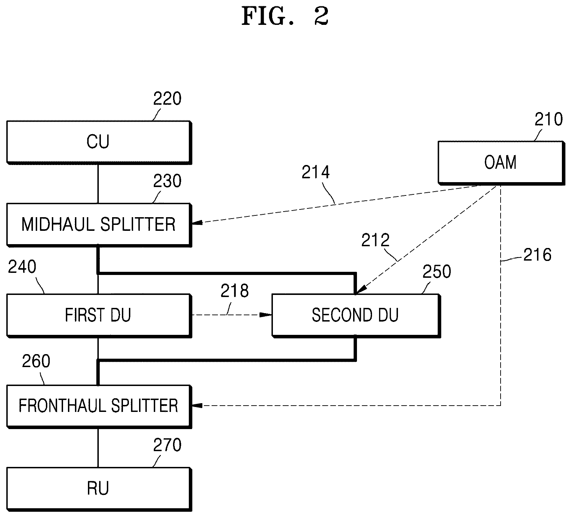

FIG. 2 is a diagram illustrating an example of performing DU scaling in a radio access network (RAN), according to an embodiment of the present disclosure.

An OAM module 210 may determine scaling-out or scaling-in for a first DU 240. In an embodiment of the present disclosure, the OAM module 210 may determine scaling-out to add a new DU to a DU pool that includes the first DU 240. In an embodiment of the present disclosure, the OAM module 210 may determine scaling-in to remove the first DU 240 from the DU pool that includes the first DU 240.

The OAM module 210 may generate a second DU 250 in 212 by determining scaling-out for the first DU 240. In an embodiment of the present disclosure, the OAM module 210 may configure the second DU 250, which is a new DU to the DU pool that includes the first DU 240. In an embodiment of the present disclosure, the OAM module 210 may activate the inactive second DU 250. In an embodiment of the present disclosure, the OAM module 210 may configure the second DU 250 for an existing server device in operation. In an embodiment of the present disclosure, the OAM module 210 may initiate operation of an additional server device and configure the second DU 250 for the additional server device.

The OAM module 210 may migrate a target cell associated with the first DU 240 to the second DU 250. The OAM module 210 may configure a connection between the second DU 250 and a CU 220. In an embodiment of the present disclosure, the OAM module 210 may register the second DU 250 in a midhaul splitter module 230 for the CU 220, in 214. For example, the OAM module 210 may configure (or generate) a midhaul interface for connecting the second DU 250 to the CU 220. Although the midhaul splitter module 230 is shown in FIG. 2 as a separate module from the CU 220, it is not limited thereto. For example, the midhaul splitter module 230 may be included in the CU 220.

The OAM module 210 may configure a connection between the second DU 250 and a RU 270. In an embodiment of the present disclosure, the OAM module 210 may register the second DU 250 in a fronthaul splitter module 260 for an RU 270, in 216. For example, the OAM module 210 may configure (or generate) a fronthaul interface for connecting the second DU 250 to the RU 270. Although the fronthaul splitter module 260 is shown in FIG. 2 as a separate module from the RU 270, it is not limited thereto. For example, the fronthaul splitter module 260 may be included in the RU 270.

The OAM module 210 may migrate contexts included in the first DU 240 to the second DU 250, in 218. Contexts included in a DU may include system information, a scheduling context, control information, frequency resource information, spatial resource information, a UE context, or an RU context. In an embodiment of the present disclosure, the OAM module 210 may migrate a cell context for the target cell and a UE context to the second DU 250. For example, the OAM module 210 may synchronize the cell context and UE context of the first DU 240 with the second DU 250.

While the target cell is being migrated from the first DU 240 to the second DU 250, UEs associated with the target cell may be cut off from the wireless communication system. For example, while the fronthaul interface is being migrated, the UEs associated with the cell may not receive communication services through the target cell. When the migrating of the fronthaul interface requires longer time, i.e., time taken for the UEs associated with the target cell to be cut off from the wireless communication system exceeds a reference time, the UEs associated with the target cell may find another cell to perform a connecting operation thereto, and a lot of computing resources may be used in the procedure for the UE to find and connect to the other cell. Hence, a cell migration method that prevents the time taken for the UEs associated with the target cell to be cut off from the wireless communication system from exceeding the reference time may be required. The reference time may be so short that the user of the UE is unable to recognize the cut-off from the communication system. The reference time may be determined by a mobile carrier.

In an embodiment of the present disclosure, the OAM module 210 may quickly switch over the target cell from the first DU 240 to the second DU 250 within a preset time (e.g., the reference time). For example, the OAM module 210 may migrate all the midhaul interface, the fronthaul interface, a UE context and a cell context included in each layer of the first DU 240 at the same time from the first DU 240 to the second DU 250 within the preset time. In other words, the OAM module 210 may simultaneously perform the aforementioned operations 214, 216 and 218 for cell migration in a set time. In this case, migration operation timing of all the modules associated with the migration operation needs to be synchronized, and when the synchronization of the operation timing is not guaranteed, it may cause overall system instability. Furthermore, migrating plenty of data at a time within a set time may be hardly implemented on an actual system.

In an embodiment of the present disclosure, the OAM module 210 may migrate the target cell from the first DU 240 to the second DU 250 on a UE basis. For example, the OAM module 210 may migrate a plurality of UEs included in the target cell from the first DU 240 to the second DU 250 on a UE basis. In this case, while the target cell is being migrated, a first UE of the target cell is connected to the first DU 240 so that data of the first UE may be processed by the first DU 240, and a second UE of the target cell is connected to the second DU 250 so that data of the second UE may be processed by the second DU 250. Accordingly, referring to FIG. 2, the RU 270 may be connected to both the first DU 240 and the second DU 250 through the fronthaul splitter module 260 to transmit and receive data.

In the case of migrating the target cell on a UE basis, the fronthaul splitter module 260 may transmit data from the first UE to the first DU 240 and transmit data from the second UE to the second DU 250. For example, the fronthaul splitter module 260 may activate a fronthaul interface between the first DU 240 and the RU 270 to transmit data of the first UE to the first DU 240 or transmit data from the first DU 240 to the RU 270, and activate a fronthaul interface between the second DU 250 and the RU 270 to transmit data of the second UE to the second DU 250 or transmit data from the second DU 250 to the RU 270. Hence, to process data of a plurality of UEs associated with the target cell, the fronthaul splitter module 260 needs to quickly switch paths (or activate an interface) between DU and RU, and for high-speed switching, the fronthaul splitter module 260 may need a lot of computing resources. The high-speed switching may also deteriorate system stability and cause operation instability.

Furthermore, in the case of migrating the target cell on a UE basis, the first DU 240 and the second DU 250 may be connected for the single RU 240 until the migrating of the target cell is completed, and an MAC layer of the first DU 240 and an MAC layer of the second DU 250 may simultaneously schedule radio resources of the target cell. Hence, complexity of implementation on the system may increase and system stability may be lowered.

One or more operations described in FIG. 2 as being performed by a module or unit may be performed by an electronic device (or at least one processor of the electronic device) that includes the module or unit.

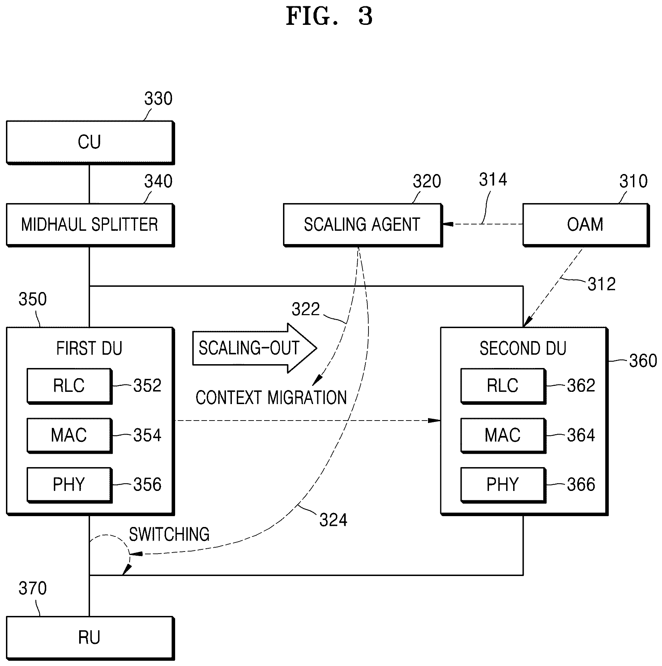

FIG. 3 is a diagram illustrating an example of performing DU scaling-out in a RAN, according to an embodiment of the present disclosure.

An OAM module 310 may determine scaling-out for a first DU 350. For example, the OAM module 310 may determine scaling-out to add a new DU to a DU pool to which the first DU 350 belongs. In an embodiment of the present disclosure, the OAM module 310 may identify that scaling-out for the first DU 350 is required, based on information about the first DU 350. For example, the OAM module 310 may determine scaling-out for the first DU 350 based on traffic of the first DU 350, throughput (e.g., a maximum amount of available resources) of the first DU 350, currently available resource (e.g., an amount of remaining resources) of the first DU 350, etc.

The OAM module 310 may initiate a second DU 360, in 312. In an embodiment of the present disclosure, the OAM module 310 may initiate the second DU 360 by generating the second DU 360. In an embodiment of the present disclosure, the OAM module 310 may configure a new DU, which is the second DU 360. In an embodiment of the present disclosure, the OAM module 310 may activate the inactive second DU 360 to initiate the second DU 360. In an embodiment of the present disclosure, the OAM module 310 may configure the second DU 360 for an existing server device in operation. In an embodiment of the present disclosure, the OAM module 310 may initiate operation of an additional server device and configure the second DU 360 for the additional server device.

The OAM module 310 may configure a connection between the second DU 360 and a CU 330. For example, the OAM module 310 may configure a midhaul interface for connecting the second DU 360 to the CU 330. For example, the OAM module 310 may generate a midhaul interface for connecting the generated second DU 360 to the CU 330. As shown in FIG. 3, a CU 330 may be connected to a plurality of DUs, i.e., the first DU 350 and a second DU 360 by a plurality of midhaul interfaces through the midhaul splitter module 340.

The OAM module 310 may transmit information about the determining of the scaling-out for the first DU 350 to a scaling agent module 320 that manages/handles DU scaling or cell migration. In an embodiment of the present disclosure, the OAM module 310 may instruct the scaling agent module 320 to perform a migration operation from the first DU 350 to the second DU 360 for scaling-out. For example, the OAM module 310 may provide information required for the scaling agent module 320 to perform the migration operation.

The scaling agent module 320 may identify the determining of scaling-out for the first DU 350, and perform a cell migration operation from the first DU 350 to the second DU 360. In an embodiment of the present disclosure, for the cell migration operation, the scaling agent module 320 may control at least one of the first DU 350, the second DU 360, an RU 370 or an inter-unit interface. For example, the scaling agent module 320 may transmit an instruction to at least one of the first DU 350, the second DU 360 or the RU 370. For example, the scaling agent module 320 may control at least some of an RLC layer 352, an MAC layer 354 or a PHY layer 356 of the first DU 350, or an RLC layer 362, an MAC layer 364 or a PHY layer 366 of the second DU 360.

The scaling agent module 320 may identify a target cell to be migrated from the first DU 350 to the second DU 360. In an embodiment of the present disclosure, the target cell may be selected by the scaling agent module 320 or the OAM module 310 from among one or more cells associated with the first DU 350, but is not limited thereto. For example, the target cell may be selected based on information (e.g., throughput, remaining resources, traffic, etc.) regarding the first DU 350, information regarding the second DU 360, information (e.g., traffic) regarding each cell associated with the first DU 350, etc. For example, the target cell may be randomly selected from among one or more cells associated with the first DU 350.

The scaling agent module 320 may migrate, for scaling-out, a context associated with the target cell from the first DU 350 to the second DU 360 in 322. For example, the scaling agent module 320 may control at least one of the first DU 350 or the second DU 360 to migrate the context associated with the target cell from the first DU 350 to the second DU 360. The context associated with the target cell may include a cell context for the target cell itself, or a UE context for a UE associated with the target cell. In an embodiment of the present disclosure, the scaling agent module 320 may migrate the context associated with the target cell included in at least one of the RLC layer 352, the MAC layer 354 or the PHY layer 356 of the first DU 350 to at least one of the RLC layer 362, the MAC layer 364 or the PHY layer 366 of the second DU 360.

The scaling agent module 320 may switch a fronthaul interface between the RU 370 and the DU from the first DU 350 to the second DU 360 for the target cell, in 324. For example, the scaling agent module 320 may control at least one of the first DU 350, the second DU 360 or the RU 370 to switch the fronthaul interface from the first DU 350 to the second DU 360 for the target cell. In an embodiment of the present disclosure, for the target cell, the scaling agent module 320 may release the fronthaul interface between the first DU 350 and the RU 370, and configure a fronthaul interface between the second DU 360 and the RU 370. In other words, for the target cell, the RU 370 may be connected to one DU through the fronthaul interface. Hence, the RAN of FIG. 3 may not include a fronthaul splitter module for providing a plurality of fronthaul interfaces between the RU 370 and the plurality of DUs for the target cell.

In the meantime, in an embodiment of the present disclosure, the RU 370 may be connected to a single DU for the target cell, but an RU associated with a plurality of cells may be connected to a first DU for a first cell and to a second DU for a second cell. In other words, the RU may be connected to a plurality of DUs through a plurality of fronthaul interfaces on a cell basis. Furthermore, in an embodiment of the present disclosure, a single DU may be connected to a plurality of RUs through a plurality of fronthaul interfaces.

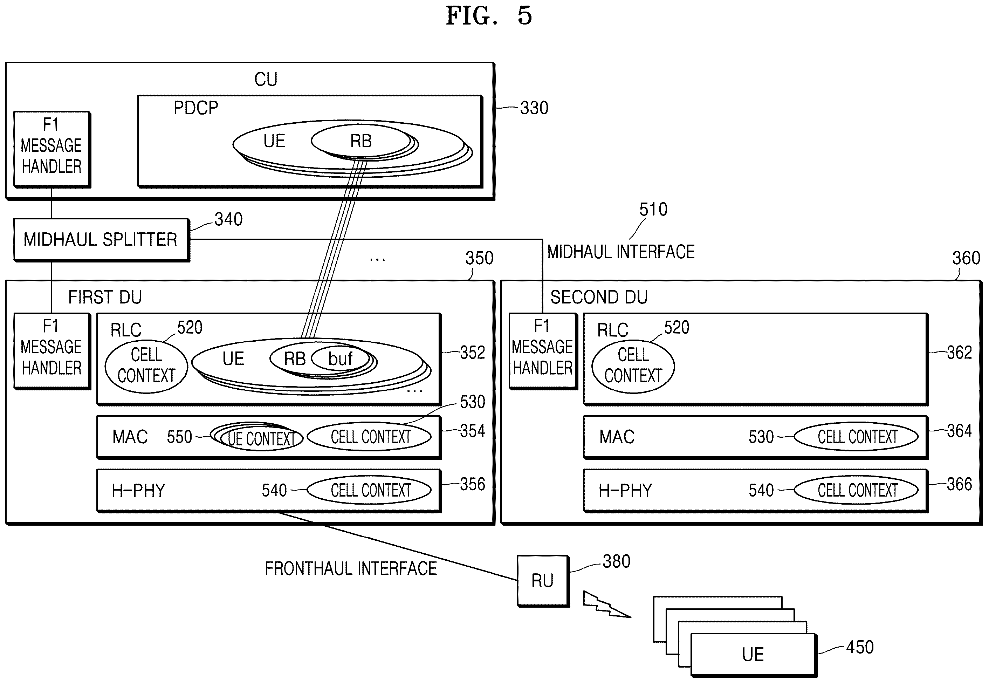

Detailed operations of the scaling agent module 320 migrating a context associated with the target cell in 322 and switching between fronthaul interfaces in 324 to migrate the target cell from the first DU 350 to the second DU 360 will be described later with reference to FIGS. 5 to 7.

The scaling agent module 320 and the OAM module 310 are separately shown in FIG. 3, but the disclosure is not limited thereto. For example, the scaling agent module 320 and the OAM module 310 are integrated in a single module, which may perform the functions and operations of the scaling agent module 320 and the OAM module 310.

The respective modules and units of FIG. 3 may be software modules, hardware modules and/or a combination thereof. For example, the first DU 350 and the second DU 360 are software modules, which may be included/stored and executed in one hardware. For example, the first DU 350 and the second DU 360 may be included/stored and executed in different hardware.

One or more operations described in FIG. 3 as being performed by a module or unit may be performed by an electronic device (or at least one processor of the electronic device) that includes the module or unit.

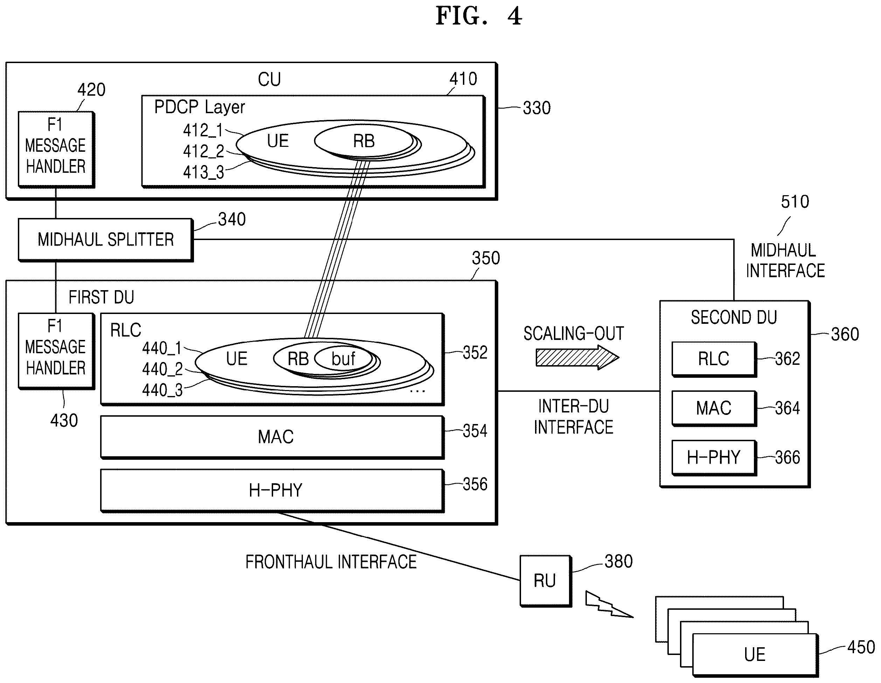

FIG. 4 is a diagram illustrating an example in which an electronic device determines scaling-out for a first DU, according to an embodiment of the present disclosure.

In FIG. 4, an example of a RAN before migration of a target cell may be illustrated. Referring to FIG. 4, one or more UEs 450 may be connected (or coupled, included or attached) to an RU 380. For example, the one or more UEs 450 may be connected (or coupled, included or attached) to a target cell of the RU 380 to perform data communication through the target cell. For example, the one or more UEs 450 may be wirelessly connected to the RU 380 to exchange information, data, packets, signals, etc., with the RAN. For example, the one or more UEs 450 may be connected (or coupled, included or attached) to the target cell of the RU 380 and thus, connected (or coupled, included or attached) to a core network through the RU 380, the first DU 350 and the CU 330.

In an embodiment of the present disclosure, the CU 330 may include a PDCP layer 410, and the PDCP layer 410 may include UE contexts 412_1, 412_2 and 412_3 for the one or more UEs 450. For example, the PDCP layer 410 may be configured with the UE contexts 412_1, 412_2 and 412_3 for the one or more UEs 450. The UE contexts 412_1, 412_2 and 412_3 for the one or more UEs 450 may include one or more radio bearers (RBs). As shown in FIG. 4, the UE context 412_1 for the first UE may include a plurality of RBs. The number of RBs may correspond to the number of applications or services being performed by the UE.

In an embodiment of the present disclosure, the first DU 350 may include the RLC layer 352, the MAC layer 354 and the high-physical (H-PHY) layer 356. The RLC layer 352 may include UE contexts 440_1, 440_2 and 440_3 for the one or more UEs 450. For example, the RLC layer 352 may be configured with the UE contexts 440_1, 440_2 and 440_3 for the one or more UEs 450. The UE contexts 440_1, 440_2 and 440_3 for the one or more UEs 450 may include one or more radio bearers (RBs). The one or more RBs may include buffers. As shown in FIG. 4, the UE context 440_1 for the first UE may include a plurality of RBs.

The CU 330 may be connected to the first DU 350 through a midhaul interface (i.e., F1 interface). In an embodiment of the present disclosure, the CU 330 may include an F1 message handler module 420, the first DU 350 may include an F1 message handler module 430, and the CU 330 and the first DU 350 may be connected through the F1 massage handler modules 420 and 430 and the midhaul splitter module 340. For example, an F1-C interface between the CU 330 and the first DU 350 may be formed to go through the F1 message handler modules 420 and 430 and the midhaul splitter module 340.

The midhaul splitter module 340 may transmit F1 messages received from a plurality of DUs to the CU 330, and distribute F1 messages received from the CU 330 to the plurality of DUs. The F1 message handler modules 420 and 430 may process the F1 messages input through the midhaul splitter module 340. The F1 messages may include information, data, signals, packets, etc., exchanged between the DU and the CU 330. For example, the F1 message may include control information.

In an embodiment of the present disclosure, the CU 330 and the first DU 350 may exchange user data directly with each other without going through the midhaul splitter module 340. For example, the PDCP layer 410 of the CU 330 and the RLC layer 352 of the first DU 350 may directly communicate the user data through the F1-U interface. This may prevent inefficient use of network resources by the midhaul splitter module 340. As shown in FIG. 4, the F1-U interface (or F1-U path) may provide user data communication between the PDCP layer 410 of the CU 330 and the RLC layer 352 of the first DU 350 without going through the midhaul splitter module 340.

In an embodiment of the present disclosure, a plurality of F1-U interfaces may be configured (or established or generated) for a single UE. For example, as many F1-U interfaces for one UE as the number of RBs configured for the UE may be configured. For example, an F1-U interface may be configured between the CU 330 (e.g., PDCP layer 410) and the first DU 350 (e.g., RLC layer 352) for each RB.

Referring to FIG. 4, as it is before the cell is migrated from the first DU 350 to the second DU 360, the fronthaul interface may be configured (or established or generated) between the RU 380 and the first DU 350 to handle communication between the RU 380 and the first DU 350. In other words, the RU 380 may be connected to the first DU 350 (e.g., the H-PHY layer 356) through the fronthaul interface. In an embodiment of the present disclosure, the RU 380 and the first DU 350 (e.g., the H-PHY layer 356) may exchange information, data, packets, signals, etc., with each other through the fronthaul interface.

In an embodiment of the present disclosure, an electronic device (e.g., a device for executing the OAM module) may determine scaling-out for the first DU 350. For example, the electronic device may determine scaling-out from the first DU 350 to a new DU, the second DU 360, and generate (or form, initiate, or activate) the second DU 360. The second DU 360 may include the RLC layer 362, the MAC layer 364 and the H-PHY layer 366. As shown in FIG. 4, the first DU 350 and the second DU 360 may be connected through an inter-DU interface (e.g., Xd interface).

In an embodiment of the present disclosure, the electronic device may generate the second DU 360, and configure (or establish or generate) a midhaul interface 510 between the second DU 360 and the CU 330. The midhaul interface 510 between the second DU 360 and the CU 330 may be configured through the midhaul splitter module 340 to handle communication between the second DU 360 and the CU 330.

FIGS. 5 to 7 are diagrams illustrating examples in which an electronic device performs cell migration for DU scaling-out, according to an embodiment of the present disclosure.

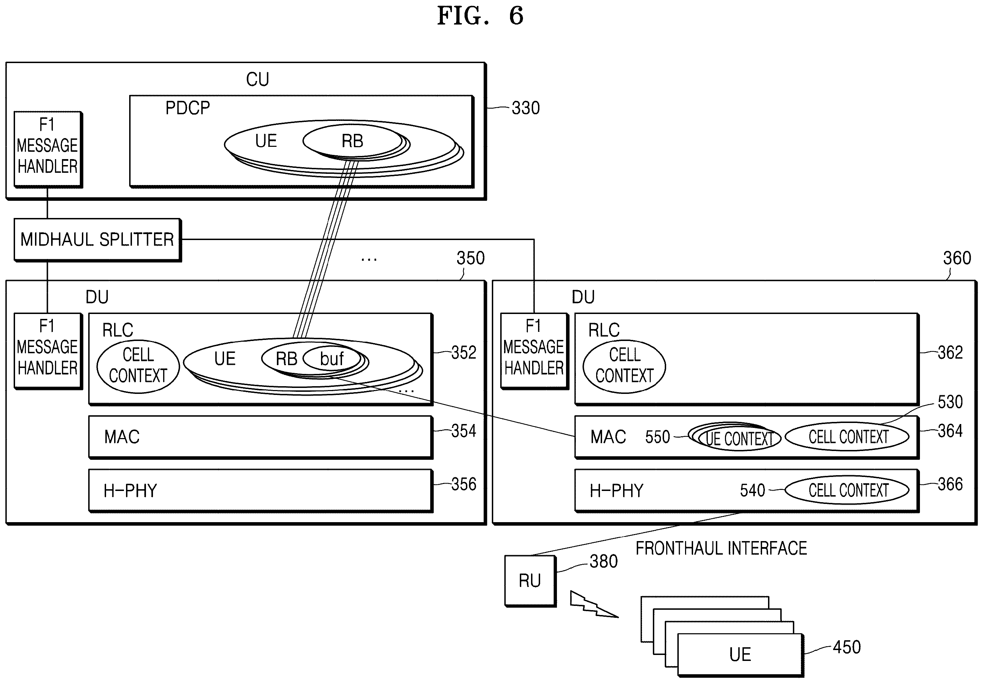

The electronic device for performing the following operations in FIGS. 5 to 7 may be different from or identical to the electronic device that performs the aforementioned operations of FIG. 4. In FIGS. 5 and 6, an example in which an electronic device (e.g., a device for executing the scaling agent module) migrates a cell context for the target cell and a fronthaul interface according to an embodiment of the present disclosure may be illustrated.

The electronic device may identify determining of scaling-out for the first DU 350. In an embodiment of the present disclosure, the electronic device may identify determining of an OAM module of scaling-out from the first DU 350 to the second DU 360. The electronic device may identify a target cell to be migrated from the first DU 350 to the second DU 360. In an embodiment of the present disclosure, the electronic device may identify the target cell determined by the OAM module as a migration subject. In an embodiment of the present disclosure, the electronic device may determine a target cell among cells associated with (or included in or attached to) the first DU 350. The cells associated with the first DU 350 may include a cell of the RU 380 connected to the first DU 350.

Referring to FIG. 5, the first DU 350 may include cell contexts 520, 530 and 540 for the target cell. The cell contexts 520, 530 and 540 for the target cell may include configuration information regarding a frequency band of the target cell, a radio resource scheduling method, a common signal to be transmitted to the one or more UEs 450 associated with the target cell, etc. Connection of the one or more UEs 450 associated with the target cell may be configured and managed based on the cell context for the target cell. The one or more UEs 450 associated with the target cell may include a UE included in an effective range of the target cell, a UE connected to the target cell, a UE attached to the target cell, a UE receiving a communication service through the target cell, a UE accessing a network through the target cell, etc. The cell contexts included in the respective RLC layer 352, MAC layer 354 and H-PHY layer 356 of the first DU 350 may be different from one another, different in part, or identical to each other.

The electronic device may migrate the target cell from the first DU 350 to the second DU 360. Referring to FIG. 5, the electronic device may migrate the cell contexts 520, 530 and 540 for the target cell included in the first DU 350 to the second DU 360. In an embodiment of the present disclosure, the electronic device may migrate the cell contexts 520, 530 and 540 for the target cell included in at least one of the RLC layer 352, the MAC layer 354 or the H-PHY layer 356 of the first DU 350 to at least one of the RLC layer 362, the MAC layer 364 or the H-PHY layer 366 of the second DU 360. For example, the electronic device may migrate the cell context 520 included in the RLC layer 352 of the first DU 350 to the RLC layer 362 of the second DU 360. For example, the electronic device may migrate the cell context 530 included in the MAC layer 354 of the first DU 350 to the MAC layer 364 of the second DU 360. For example, the electronic device may migrate the cell context 540 included in the H-PHY layer 356 of the first DU 350 to the H-PHY layer 366 of the second DU 360.

In an embodiment of the present disclosure, as the first DU 350 includes the cell context 520, 530 or 540 for the target cell while the electronic device is migrating the cell context 520, 530 or 540 for the target cell from the first DU 350 to the second DU 360, the first DU 350 may process data for the target cell (e.g., data for communication of a UE associated with the target cell) and the communication of the one or more UEs 450 associated with the target cell may not be interrupted. In other words, even while the cell context 520, 530 or 540 for the target cell is being migrated, the communication service through the target cell may be maintained without being interrupted. Accordingly, the migrating of the cell context 520, 530 or 540 for the target cell may be performed without restriction of time.

In an embodiment of the present disclosure, the electronic device may migrate the target cell by configuring the target cell for the second DU 360 based on parameters that have been used to configure the target cell for the first DU 350. For example, the electronic device may generate (or configure) the cell context 520, 530 or 540 for the target cell for the second DU 360 by using a parameter that has been used to generate (or configure) the cell context 520, 530 or 540 for the target cell for the first DU 350. For example, the electronic device may generate the cell context 520 for the target cell for the RLC layer 362 of the second DU 360 by using a parameter that has been used to generate the cell context 520 for the target cell of the RLC layer 352 of the first DU 350. For example, the electronic device may generate the cell context 530 for the target cell for the MAC layer 364 of the second DU 360 based on a parameter that has been used to generate the cell context 530 for the target cell of the MAC layer 354 of the first DU 350. For example, the electronic device may generate the cell context 540 for the target cell for the H-PHY layer 364 of the second DU 360 based on a parameter that has been used to generate the cell context 540 for the target cell of the H-PHY layer 354 of the first DU 350.

In an embodiment of the present disclosure, the electronic device may duplicate (or reproduce) the cell contexts 520, 530 and 540 themselves for the target cell included in the first DU 350 to the second DU 360. For example, the electronic device may control the first DU 350 to duplicate (or reproduce) the cell contexts 520, 530 and 540 for the target cell to the second DU 360. For example, the cell contexts 520, 530 and 540 for the target cell may be duplicated/reproduced from the first DU 350 to the second DU 360 through an inter-DU interface.

Referring to FIGS. 5 and 6, the electronic device may migrate UE contexts 550 for one or more UEs 450 included in the MAC layer 354 of the first DU to the MAC layer 364 of the second DU 360. In an embodiment of the present disclosure, the electronic device may generate (or configure) the UE contexts 550 for the one or more UEs 450 for the MAC layer 364 of the second DU 360 based on parameters that have been used to generate (or configure) the UE contexts 550 for the one or more UEs 450 for the MAC layer 354 of the first DU 350. In an embodiment of the present disclosure, the electronic device may duplicate (or reproduce) the UE contexts 550 themselves for the one or more UEs 450 included in the MAC layer 354 of the first DU to the MAC layer 364 of the second DU 360. For example, the electronic device may control the first DU 350 to duplicate (or reproduce) and provide the UE contexts 550 for the one or more UEs 450 included in the MAC layer 354 to the MAC layer 364 of the second DU 360. For example, the UE contexts 550 for the one or more UEs 450 may be duplicated/reproduced from the first DU 350 to the second DU 360 through the inter-DU interface.

Referring to FIG. 6, the electronic device may configure (or establish, generate or activate) a connection between the RLC layer 352 of the first DU 350 and the MAC layer 364 of the second DU 360 for DU scaling or migration of the target cell. In other words, the electronic device may configure (or activate) an interface for connection between the RLC layer 352 of the first DU 350 and the MAC layer 364 of the second DU 360 (e.g., the inter-DU interface). For example, the electronic device may migrate the UE contexts 550 for the one or more UEs 450 included in the MAC layer 354 of the first DU 350 to the MAC layer 364 of the second DU 360, and then configure a connection between the RLC layer 352 of the first DU 350 and the MAC layer 364 of the second DU 360.

Referring to FIGS. 5 and 6, the electronic device may switch the fronthaul interface of the RU 380 for the target cell from the first DU 350 to the second DU 360. For example, after migrating the cell contexts 520, 530 and 540 for the target cell from the first DU 350 to the second DU 360, the electronic device may release (or terminate, interrupt, or deactivate) the fronthaul interface between the RU 380 and the first DU 350 and establish (or initiate or activate) a fronthaul interface between the RU 380 and the second DU 360. For example, as soon as the electronic device migrates the cell contexts 520, 530 and 540 for the target cell from the first DU 350 to the second DU 360, the electronic device may release the fronthaul interface between the RU 380 and the first DU 350 and establish a fronthaul interface between the RU 380 and the second DU 360. For example, as soon as the electronic device migrates the UE contexts 550 for the one or more UEs 450 to the MAC layer 364 of the second DU 360, the electronic device may switch the fronthaul interface of the RU 380 for the target cell from the first DU 350 to the second DU 360. For example, after migrating the UE contexts 550 for the one or more UEs 450 to the MAC layer 364 of the second DU 360, the electronic device may switch the fronthaul interface of the RU 380 for the target cell from the first DU 350 to the second DU 360.

In an embodiment of the present disclosure, the releasing of the fronthaul interface between the RU 380 and the first DU 350 and the establishing of the fronthaul interface between the RU 380 and the second DU 360 may be performed simultaneously. In an embodiment of the present disclosure, there may be a time difference between the releasing of the fronthaul interface between the RU 380 and the first DU 350 and the establishing of the fronthaul interface between the RU 380 and the second DU 360. For example, the electronic device may release the fronthaul interface between the RU 380 and the first DU 350 and then establish a fronthaul interface between the RU 380 and the second DU 360. In this case, there may be a time for which the RU 380 is cut off from the RAN, the time being within a reference time, which may be so short that the user of the UE is unable to recognize the termination of the communication. For example, the electronic device may establish the fronthaul interface between the RU 380 and the second DU 360 and then release the fronthaul interface between the RU 380 and the first DU 360.

Referring to FIG. 6, when communication of the one or more UEs 450 through the target cell is available after migration of the cell contexts 520, 530 and 540 for the target cell, migration of the UE contexts 550 for the one or more UEs 450 and switching of the fronthaul interface, the electronic device may remove (or delete) the migrated cell contexts 530 and 540 and UE contexts 550 from the MAC layer 354 and H-PHY layer 356 of the first DU 350. In an embodiment of the present disclosure, the electronic device may identify that communication of the target cell is in an available state, and accordingly, remove (or delete) the cell contexts 530 and 540 and the UE contexts 550 migrated from the MAC layer 354 and the H-PHY layer 356 of the first DU 350. The communication available state may include a communication state that satisfies an arbitrary criterion such as a delay, a data processing rate, etc.

Referring to FIG. 6, the one or more UEs 450 included in the target cell may receive communication services through the RU 380, the H-PHY layer 366 and MAC layer 364 of the second DU 360, the RLC layer 352 of the first DU 350, and the CU 330. In other words, the one or more UEs 450 included in the target cell may connect to (or access) a core network through the RU 380, the H-PHY layer 366 and MAC layer 364 of the second DU 360, the RLC layer 352 of the first DU 350, and the CU 330. That is, data for communication of the one or more UEs 450 associated with the target cell may be processed by the H-PHY layer 366 and the MAC layer 364 of the second DU 360 and the RLC layer 352 of the first DU 350.

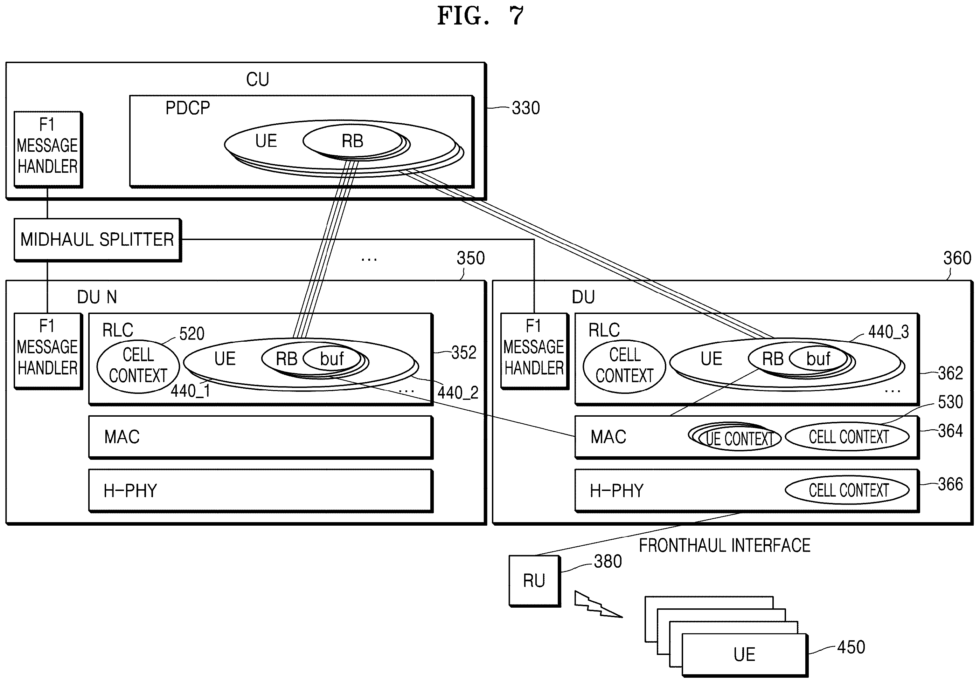

FIG. 7 is a diagram illustrating an example in which the electronic device migrates an F1-U interface and UE contexts for one or more UEs included in an RLC layer, according to an embodiment of the present disclosure.

The electronic device may migrate the UE contexts 440_1, 440_2 and 440_3 for the one or more UEs 450 included in the RLC layer 352 of the first DU 350 to the RLC layer 362 of the second DU 360 on a UE basis. In an embodiment of the present disclosure, the electronic device may use information (e.g., parameters or data) that has been used to generate (or configure) the UE contexts 440_1, 440_2 and 440_3 for the RLC layer 352 of the first DU 350 to generate (or configure) the UE contexts 440_1, 440_2 and 440_3 for the RLC layer 352 of the second DU 360. In an embodiment of the present disclosure, the electronic device may duplicate (or reproduce) the UE contexts 440_1, 440_2 and 440_3 themselves in the RLC layer 352 of the first DU 350 to the RLC layer 362 of the second DU 360. For example, the electronic device may control the first DU 350 to duplicate (or reproduce) the UE contexts 440_1, 440_2 and 440_3 included in the RLC layer 352 to the RLC layer 362 of the second DU 360 on a UE basis. For example, the UE contexts 440_1, 440_2 and 440_3 may be duplicated/reproduced from the first DU 350 to the second DU 360 through an inter-DU interface on a UE basis.

In an embodiment of the present disclosure, the electronic device may migrate a plurality of UE groups including at least some of the one or more UEs 450 associated with the target cell in sequence from the RLC layer 352 of the first DU 350 to the RLC layer 362 of the second DU 360. For example, the electronic device may sequentially migrate the plurality of UE groups in multiple rounds (or at multiple times). For example, the electronic device may migrate UE contexts for one or more first target UEs, which are at least some of the one or more UEs 450 associated with the target cell, and then migrate UE contexts for one or more second target UEs, which are at least some of UEs whose contexts have not been migrated. The electronic device may migrate the UE contexts from the RLC layer 352 of the first DU 350 to the RLC layer 362 of the second DU 360 on a UE basis until the one or more UEs 450 associated with the target cell are all migrated.

In an embodiment of the present disclosure, the electronic device may identify one or more target UEs to be migrated in the current round (or at a current time) among the one or more UEs 450 associated with the target cell. For example, the electronic device may select (or determine) one or more target UEs to be migrated in the current round (or at a current time) among the one or more UEs 450 associated with the target cell. For example, the electronic device may determine a migration sequence of UEs (or UE groups). For example, the electronic device may identify one or more target UEs determined by another electronic device.

In an embodiment of the present disclosure, the electronic device may switch the f1-U interface for the one or more target UEs from the first DU 350 to the second DU 360. For example, after migrating the UE contexts for the one or more target UEs to the RLC layer 362 of the second DU 360 from the RLC layer 352 of the first DU 350, the electronic device may switch the F1-U interface for the one or more target UEs to the second DU 360 from the first DU 350. For example, the electronic device may release (or deactivate, cut off, interrupt, or remove) the F1-U interface between the CU 330 and the first DU 350 for a UE whose UE context has been migrated, and configure (or activate, establish and generate) the F1-U interface between the CU 330 and the second DU 360. For example, the configuring of the F1-U interface between the CU 330 and the second DU 360 and the releasing of the F1-U interface between the CU 330 and the first DU 360 may be performed at the same time. For example, the configuring of the F1-U interface between the CU 330 and the second DU 360 may be performed after the F1-U interface between the CU 330 and the first DU 360 may be released. In the meantime, for a UE whose UE context has not been migrated among the one or more UEs 450 for the target cell, the F1-U interface between the CU 330 and the first DU 350 may be maintained.

In an embodiment of the present disclosure, the electronic device may change (or switch) the RLC layer-to-MAC layer path for the one or more target UEs from the first DU 350-to-second DU 360 path to the second DU 360-to-second DU 360 path. For example, for the one or more target UEs, the electronic device may change (or switch) from the path from the RLC layer 352 of the first DU 350 to the MAC layer 364 of the second DU 360 to the path from the RLC layer 362 of the second DU 360 to the MAC layer 364 of the second DU 360. The RLC layer-to-MAC layer path for a UE whose UE context has not been migrated among the one or more UEs 450 for the target cell may be maintained as the path from the first DU 350 to the second DU 360 (i.e., the path from the RLC layer 352 of the first DU 350 to the MAC layer 364 of the second DU 360).

As shown in FIG. 7, the first UE whose UE context 440_1, F1-U interface and RLC-to-MAC path have not been migrated may access (or connect to) a core network through the RU 380, the H-PHY layer 366 and the MAC layer 364 of the second DU 360, the RLC layer 352 of the first DU 350 and the CU 330 to receive communication services. On the other hand, the second UE whose UE context 440_3, F1-U interface and RLC-to-MAC path have been migrated may access (or connect to) the core network through the RU 380, the H-PHY layer 366, MAC layer 364 and RLC layer 362 of the second DU 360 and the CU 330 to receive communication services. In other words, data about a UE that has not been migrated among data for the target cell may be processed by the RLC layer 352 of the first DU 350, and data about a UE that has been migrated may be processed by the RLC layer 362 of the second DU 360.

In an embodiment of the present disclosure, the electronic device may remove the UE context 440_3 for the UE whose UE context 440_3, F1-U interface and RLC-to-MAC path have been migrated from the RLC layer 352 of the first DU 350. For example, after migrating UE contexts for one or more target UEs, switching the F1-U interface and changing the RLC-to-MAC path, the electronic device may remove the UE contexts for the one or more target UEs from the RLC layer 352 of the first DU 350 regardless of migration of other UE contexts. For example, after migrating UE contexts for one or more target UEs, switching the F1-U interface and changing the RLC-to-MAC path, the electronic device may remove the UE contexts for the one or more target UEs from the RLC layer 352 of the first DU 350 before migrating UE contexts for other UEs to the RLC layer 352 of the first DU 350. For example, the electronic device may remove UE contexts for a plurality of UEs associated with the target cell from the RLC layer 352 of the first DU 350 after completing migration of the UE contexts for all the plurality of UEs associated with the target cell, switching of the F1-U interface and change of the RLC-to-MAC path. For example, the electronic device may periodically or aperiodically remove the UE contexts for the UEs whose migration has been completed from the RLC layer 352 of the first DU.

The electronic device may migrate the UE contexts for all the UEs associated with the target cell from the RLC layer 352 of the first DU 350 to the RLC layer 362 of the second DU 360. In an embodiment of the present disclosure, until the UE contexts for all the UEs associated with the target cell are migrated, it may select a target UE to be migrated, migrate a UE context for the selected target UE from the RLC layer 352 to the RLC layer 362, switch the F1-U interface for the selected target UE, and change the RLC-to-MAC path. When there is no more UE to be migrated, i.e., when migration of the UE contexts for all the UEs associated with the target cell is completed, the electronic device may remove (or delete) information about the target cell from the first DU 350. For example, as the migrating of the target cell is completed, the electronic device may remove the cell context 520 for the target cell from the RLC layer 352. For example, as the migrating of the target cell is completed, the electronic device may remove the UE contexts 440_1, 440_2 and 440_3 from the RLC layer 352.

In an embodiment of the present disclosure, as the migrating of the target cell is completed, the electronic device may release (or interrupt, terminate or deactivate) the connection between the RLC layer 352 of the first DU 350 and the MAC layer 364 of the second DU 360. In an embodiment of the present disclosure, as the migrating of the target cell is completed, the electronic device may release (or interrupt, terminate or deactivate) the interface between the first DU 350 and the second DU 360. Along with the migration of the target cell, data for communication of the one or more UEs 450 associated with the target cell that has been processed by the first DU 350 may be processed by the second DU 360.

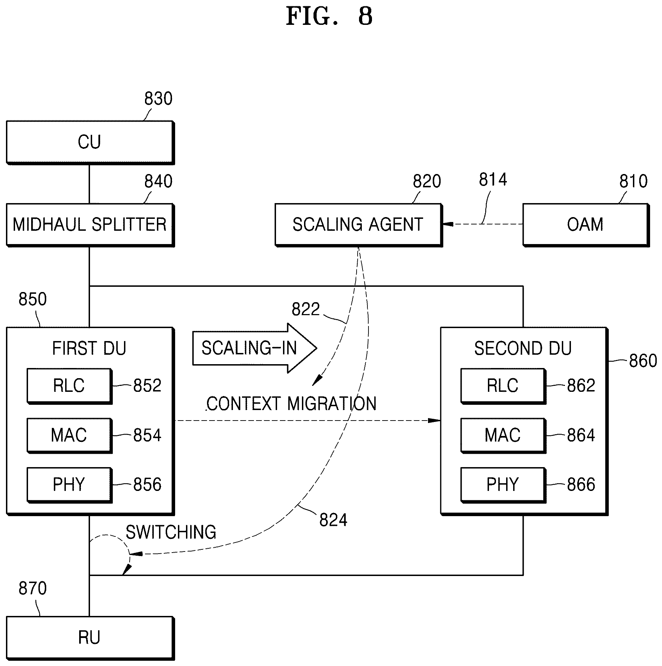

FIG. 8 is a diagram illustrating an example of performing DU scaling-in in a RAN, according to an embodiment of the present disclosure.

An OAM module 810 may determine scaling-in for a first DU 850. For example, the OAM module 810 may determine scaling-in to remove the first DU 850 from a DU pool that includes the first DU 850. In an embodiment of the present disclosure, the OAM module 810 may identify that scaling-in is required based on information about the DU pool that includes the first DU 850. For example, the OAM module 810 may determine scaling-in for the first DU 850 based on traffic of the DU pool to which the first DU 850 belongs, throughput (e.g., a maximum amount of available resources), currently available resource (e.g., an amount of remaining resources), etc.

As shown in FIG. 8, a CU 830 may be connected to a plurality of DUs, i.e., the first DU 850 and a second DU 860 by a plurality of midhaul interfaces through the midhaul splitter module 840. In an embodiment of the present disclosure, the OAM module 810 may configure a connection (or midhaul interface) between the second DU 860 and the CU 830 for a target cell to be migrated.

The OAM module 810 may transmit information about the determining of the scaling-in for the first DU 850 to a scaling agent module 820. In an embodiment of the present disclosure, the OAM module 810 may instruct the scaling agent module 820 to perform a migration operation from the first DU 850 to the second DU 860 for scaling-in. For example, the OAM module 810 may provide information required for the scaling agent module 820 to perform the migration operation.

The scaling agent module 820 may identify the determining of scaling-in for the first DU 850, and perform a cell migration operation from the first DU 850 to the second DU 860 for scaling-in. In an embodiment of the present disclosure, for the migration operation for scaling-in, the scaling agent module 820 may control at least one of the first DU 850, the second DU 860, an RU 870 or an inter-unit interface. For example, the scaling agent module 820 may transmit an instruction to at least one of the first DU 850, the second DU 860 or the RU 870. For example, the scaling agent module 820 may control at least some of an RLC layer 852, an MAC layer 854 or a PHY layer 856 of the first DU 850, or an RLC layer 862, an MAC layer 864 or a PHY layer 866 of the second DU 860.

The scaling agent module 820 may identify a target cell to be migrated from the first DU 850 to the second DU 860. In an embodiment of the present disclosure, the target cell may be selected by the scaling agent module 820 or the OAM module 810 from among one or more cells associated with the first DU 850, but is not limited thereto. For example, the target cell may be selected based on information (e.g., throughput, remaining resources, traffic, etc.) regarding the first DU 850, information regarding the second DU 860, information (e.g., traffic) regarding each cell associated with the first DU 850, etc. For example, the target cell may be randomly selected from among one or more cells associated with the first DU 850. In an embodiment of the present disclosure, in the case of scaling-in, all the cells associated with the first DU 850 may be migrated to the second DU 860 as a target cell.

The scaling agent module 820 may migrate, for scaling-in, a context associated with the target cell from the first DU 850 to the second DU 860 in 822. For example, the scaling agent module 820 may control at least one of the first DU 850 or the second DU 860 to migrate the context associated with the target cell from the first DU 850 to the second DU 860. The context associated with the target cell may include a cell context for the target cell itself, or a UE context for a UE associated with the target cell. In an embodiment of the present disclosure, the scaling agent module 820 may migrate the context associated with the target cell included in at least one of the RLC layer 852, the MAC layer 854 or the PHY layer 856 of the first DU 850 to at least one of the RLC layer 862, the MAC layer 864 or the PHY layer 866 of the second DU 860.

The scaling agent module 820 may switch a fronthaul interface between the RU 870 and the DU from the first DU 850 to the second DU 860 for the target cell, in 824. For example, the scaling agent module 820 may control at least one of the first DU 850, the second DU 860 or the RU 870 to switch the fronthaul interface from the first DU 850 to the second DU 860 for the target cell. In an embodiment of the present disclosure, for the target cell, the scaling agent module 820 may release the fronthaul interface between the first DU 850 and the RU 870, and configure a fronthaul interface between the second DU 860 and the RU 870. In other words, for the target cell, the RU 870 may be connected to one DU through the fronthaul interface. Hence, the RAN system of FIG. 8 may not require the fronthaul splitter module for providing a plurality of fronthaul interfaces between the RU 870 and the plurality of DUs for the target cell.

In the meantime, in an embodiment of the present disclosure, the RU 870 may be connected to a single DU for the target cell, but an RU associated with a plurality of cells may be connected to a first DU for a first cell and to a second DU for a second cell. In other words, the RU may be connected to a plurality of DUs through a plurality of fronthaul interfaces on a cell basis. Furthermore, in an embodiment of the present disclosure, a single DU may be connected to a plurality of RUs through a plurality of fronthaul interfaces.

In an embodiment of the present disclosure, as the migration of the target cell is completed, the first DU 850 may be removed from the DU pool. In an embodiment of the present disclosure, as the migration of the target cell is completed, the midhaul interface between the first DU 850 and the CU 830 may be released. In an embodiment of the present disclosure, as all the cells included in the first DU 850 are migrated to the second DU 860, the first DU 850 may be removed from the DU pool and the scaling-in operation may be completed.

Detailed operations of the scaling agent module 820 migrating a context associated with the target cell in 822 and switching fronthaul interfaces in 824 to migrate the target cell from the first DU 850 to the second DU 860 may be performed according to the aforementioned one or more embodiments with reference to FIGS. 5 to 7. For example, the one or more embodiments described for migration of a target cell for scaling-out will be equally applied to migration of a target cell for scaling-in. Similarly, the one or more embodiments described for migration of a target cell for scaling-in will be equally applied to migration of a target cell for scaling-out. Furthermore, in the present disclosure, the one or more embodiments described for migration of a target cell for scaling-in or scaling-out will be equally applied to migration of a target cell for occasions other than scaling-in or scaling-out.

The scaling agent module 820 and the OAM module 810 are separately shown in FIG. 8, but the disclosure is not limited thereto. For example, the scaling agent module 820 and the OAM module 810 are integrated in a single module, which may perform the functions and operations of the scaling agent module 820 and the OAM module 810.

The respective modules and entities of FIG. 8 may be software modules, hardware modules and/or combinations thereof. For example, the first DU 850 and the second DU 860 are software modules, which may be included/stored in one hardware (e.g., a server device). For example, the first DU 850 and the second DU 860 may be included/stored and executed in different hardware.

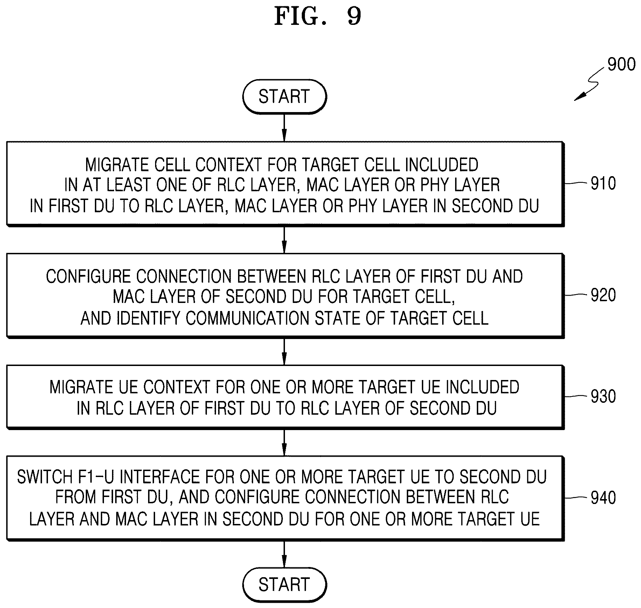

FIG. 9 is a flowchart illustrating an example of a method of performing a cell migration operation for a DU, according to an embodiment of the present disclosure.

Referring to FIG. 9, a method 900 by which an electronic device performs a cell migration operation for a DU may include operations 910 to 940. In an embodiment of the present disclosure, operations 910 to 940 may be executed by at least one processor included in an electronic device. In an embodiment of the present disclosure, operations 910 to 940 may be executed by an electronic device (e.g., at least one processor of the electronic device) that includes or performs the scaling agent module. The method 900 by which the electronic device performs the cell migration operation for a DU is not limited to what is shown in FIG. 9, and may further include an operation not shown in FIG. 9 or omit some of the operations.

In operation 910, the electronic device may migrate a cell context for a target cell included in at least one of an RLC layer, an MAC layer or a PHY layer of a first DU to at least one of an RLC layer, an MAC layer or a PHY layer of a second DU.

In operation 920, the electronic device may configure a connection between the RLC layer of the first DU and the MAC layer of the second DU for the target cell, and identify that the target cell is in a state of being available for communication. In an embodiment of the present disclosure, the state of being available for communication may include a state of communication through the target cell satisfying a criterion. For example, the state of being available for communication may include a state that satisfies a criterion for communication delay, communication performance, processing capability, throughput, or the like.

In operation 930, the electronic device may migrate UE contexts for one or more target UEs among UE contexts for a plurality of UEs associated with the target cell, which are included in the RLC layer of the first DU, to the RLC layer of the second DU. In other words, the electronic device may migrate the UE contexts on a UE basis.

In operation 940, the electronic device may switch an F1-U interface for the one or more target UEs to the second DU from the first DU, and configure a connection (or a path or an interface) between the RLC layer and the MAC layer of the second DU for the one or more target UEs. For example, a connection is configured between RLC and MAC layers of the second DU for a migrated UE, and a connection is configured between the RLC layer of the first DU and the MAC layer of the second DU for a non-migrated UE. As there are as many F1-U interfaces as the number of radio bearers of UEs, it may be difficult for migration from the first DU to the second DU for all the UEs at once. Hence, the electronic device may migrate the UE context of the RLC layer and the F1-U interface on a UE basis rather than in a whole cell unit.

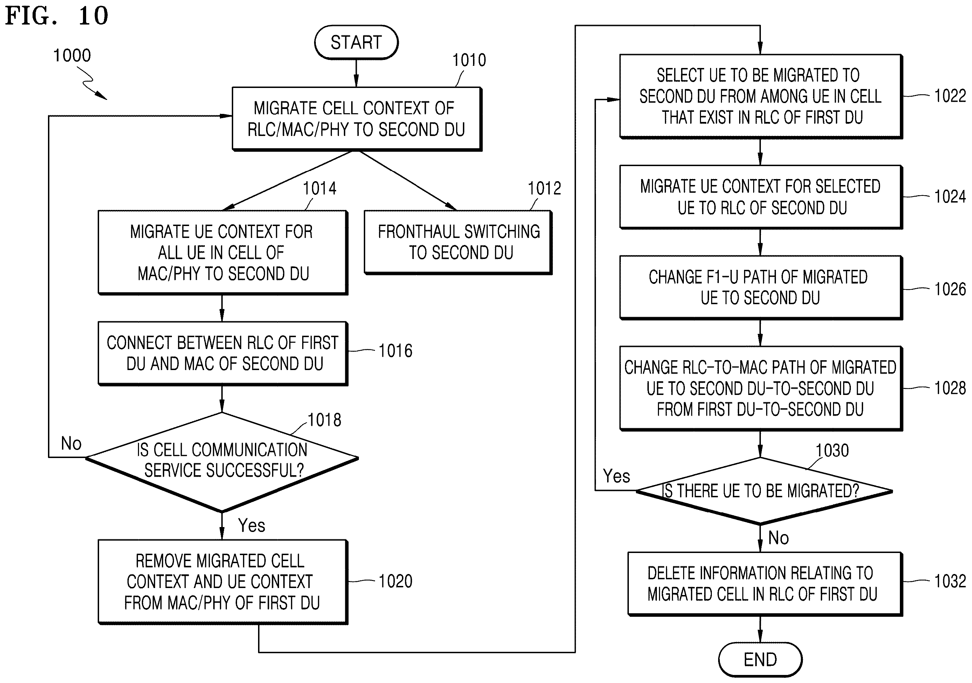

FIG. 10 is a flowchart illustrating an example of a method of performing a cell migration operation for a DU, according to an embodiment of the present disclosure.

Referring to FIG. 10, a method 1000 by which an electronic device performs a cell migration operation for a DU may include operations 1010 to 1032. In an embodiment of the present disclosure, operations 1010 to 1032 may be executed by at least one processor included in the electronic device. In an embodiment of the present disclosure, operations 1010 to 1032 may be executed by an electronic device (e.g., at least one processor of the electronic device) that includes or performs the scaling agent module. The method 1000 by which the electronic device performs the cell migration operation for a DU is not limited to what is shown in FIG. 10, and may further include an operation not shown in FIG. 10 or omit some of the operations.

In operation 1010, the electronic device may migrate cell contexts for the target cell in the RLC layer, the MAC layer and the PHY layer in the first DU to the RLC layer, the MAC layer and the PHY layer in the second DU.

In operation 1012, the electronic device may switch the fronthaul interface for the target cell from the first DU to the second DU based on the migrating of the cell context for the target cell. For example, the electronic device may switch the fronthaul interface for the target cell from the first DU to the second DU after the migration of the cell context for the target cell.

In operation 1014, the electronic device may migrate UE contexts for a plurality of UEs (e.g., all UEs) in the target cell of the MAC and PHY layers of the first DU to the MAC and PHY layers of the second DU, based on the migrating of the cell context for the target cell. For example, the electronic device may migrate UE contexts for all UEs in the target cell of the MAC and PHY layers of the first DU to the MAC and PHY layers of the second DU, after the migration of the cell context for the target cell.

In operation 1016, the electronic device may configure a connection between the RLC layer of the first DU and the MAC layer of the second DU based on the migrating of the UE context to the MAC and PHY layers of the second DU. For example, the electronic device may configure a connection between the RLC layer of the first DU and the MAC layer of the second DU after the migration of the UE context to the MAC and PHY layers of the second DU.

In an embodiment of the present disclosure, the electronic device may perform operations 1014 and 1016 in parallel with operation 1012. For example, the electronic device may perform operations 1014 and 1016 at the same time as the operation 1012.

In operation 1018, the electronic device may identify whether a communication service of the target cell is provided successfully. In an embodiment of the present disclosure, the electronic device may identify whether the UE associated with the target cell is successfully accessible to a communication network through the target cell. In an embodiment of the present disclosure, the electronic device may identify whether the target cell is in a state of being available for communication. In an embodiment of the present disclosure, whether a communication service of the target cell is provided successfully may be determined. In an embodiment of the present disclosure, information about whether a communication service of the target cell is provided successfully may be received.

Based on identifying that the communication service of the target cell is not successfully provided, the electronic device may re-perform at least one of operations 1010 to 1016.

In operation 1020, based on identifying that the communication service of the target cell is successfully provided, the electronic device may remove the migrated UE contexts and cell contexts for the target cell from the MAC and PHY layers of the first DU. For example, after identifying that the communication service of the target cell is successfully provided (or in response to the identifying), the electronic device may remove the migrated UE contexts and cell contexts for the target cell from the MAC and PHY layers of the first DU.

In operation 1022, the electronic device may select one or more target UEs to be migrated to the second DU from among one or more UEs in the target cell existing (or included) in the RLC layer of the first DU. In an embodiment of the present disclosure, the electronic device may select one or more target UEs to be migrated to the RLC layer of the second DU from among one or more UEs that have not been migrated to the RLC layer of the second DU.

In operation 1024, the electronic device may migrate UE contexts for the selected one or more target UEs to the RLC layer of the second DU.

In operation 1026, the electronic device may change (or switch) the F1-U path (i.e., F1-U interface) of the one or more target UEs migrated to the RLC layer of the second DU from the first DU to the second DU.

In operation 1028, the electronic device may change (or switch) the RLC layer-to-MAC layer path of the one or more target UEs migrated to the RLC layer of the second DU from the first DU-to-second DU path (i.e., a path from the RLC layer of the first DU to the MAC layer of the second DU) to the second DU-to-second DU path (i.e., a path from the RLC layer of the second DU to the MAC layer of the second DU). For example, the electronic device may configure a connection between the RLC and MAC layers of the second DU for the migrated one or more target UEs.

In operation 1030, the electronic device may identify whether there is a UE to be migrated in the RLC layer of the first DU, i.e., a UE that has not been migrated among one or more UEs in the target cell. In an embodiment of the present disclosure, the electronic device may identify whether there is a UE to be migrated left in the RLC layer of the first DU.

Based on identifying that there is a UE to be migrated, the electronic device may re-perform at least one of operations 1022 to 1028.

In operation 1032, based on identifying that there is no UE to be migrated, i.e., that UE contexts for all UEs in the target cell have been migrated to the RLC layer of the second DU, the electronic device may delete (or remove) information relating to the migrated target cell in the RLC layer of the first DU. For example, the electronic device may delete UE contexts and cell contexts for the target cell included in the RLC layer of the first DU.

In an embodiment of the present disclosure, based on completion of the cell migration, the electronic device may transmit information indicating that the cell migration has been completed to a network element management system (EMS) (or a configuration module managed by a mobile carrier's operator).

Although the electronic device is shown in FIG. 10 as performing operations 1024 to 1028 in sequence, it is not limited thereto. For example, the electronic device may perform at least some of operations 1024 and 1028 at the same time.

The electronic device is shown in FIG. 10 as deleting the UE contexts included in the RLC layer of the first DU after migrating all the UEs from the first DU to the second DU, but it is not limited thereto. For example, the electronic device may delete (or remove) the UE contexts migrated to the RLC layer of the second DU after at least one of operations 1024, 1026 or 1028. In other words, whenever a UE is migrated to the second DU, the electronic device may delete the UE context for the migrated UE. For example, the electronic device may delete UE contexts for migrated UEs periodically or aperiodically.

As shown in FIG. 10, the method 1000 by which the electronic device performs a cell migration operation for a DU may include operations 1010 to 1020 of migration of MAC and PHY layers and the fronthaul interface, and operations 1022 to 1032 of migration of the midhaul interface and RLC layer. In an embodiment of the present disclosure, as for vDU scaling, the migration method for MAC and PHY layers and fronthaul interfaces and the migration method for the midhaul interfaces and RLC layer may be different. For example, to reduce complexity that may occur from operation of two fronthaul interfaces and an MAC scheduler, the electronic device may migrate information at once on a cell basis in each stage of migrating MAC and PHY layers and fronthaul interfaces while performing migration on a UE basis for stable migration operation in each stage of migrating midhaul interfaces and RLC layer.

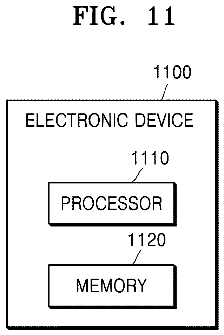

FIG. 11 is a diagram illustrating an example of an electronic device for performing a cell migration operation for a DU, according to an embodiment of the present disclosure.

An electronic device 1100 shown in FIG. 11 is one for performing a cell migration operation for a DU, which may be a server device. For example, the electronic device 1100 is a communication device that constitutes a RAN, which may be a server device that exists to constitute the RAN, such as a server device that performs an RU function, a server device that performs a DU function, a server device that performs a CU function, or a server device that performs an OAM function, etc., or an extra server device that controls cell migration (e.g., a scaling agent device).

In an embodiment of the present disclosure, the electronic device 1100 may include at least one processor 1110 and a memory 1120, but is not limited thereto.

The processor 1110 may be electrically connected to components included in the electronic device 1100 to perform computation or data processing for controlling and/or communicating of the components included in the electronic device 1100. In an embodiment of the present disclosure, the processor 1110 may load the request, command or data received from at least one of the other components onto the memory, process it, and store a resultant data in the memory. The processor 1110 may be configured with one or more processors to control a series of processes for operating the electronic device 1100 according to the aforementioned embodiments.

One or more processors included in the processor 1110 may be such circuitries as system on chips (SoCs), integrated circuits (ICs), etc. One or more processors included in the processor 1110 may be a universal processor such as a central processing unit (CPU), a micro processor unit (MPU), an application processor (AP), a digital signal processor (DSP), etc., a dedicated graphic processor such as a graphic processing unit (GPU), a vision processing unit (VPU), etc., a dedicated Al processor such as a neural processing unit (NPU) or a dedicated communication processor such as a communication processor (CP). When the one or more processors included in the processor 1110 are the dedicated Al processors, the dedicated Al processors may be designed in a hardware structure that is specific to dealing with a particular Al model.

The processor 1110 may include various processing circuits and/or a plurality of processors. For example, the term 'processor' used in the present disclosure including claims may include various processing circuits including at least one processor. One or more of the at least one processor may be individually and/or collectively, in a distributed method, configured to perform one or more functions of the present disclosure. In the present disclosure, when the processor, the at least one processor, or the one or more processors are described as being configured to perform multiple functions, it may include a situation in which one processor performs some of the functions while the other processor(s) performs some other functions, and a situation in which a single processor performs all the functions. Furthermore, the at least one processor may include a combination of processors that perform various functions in a distributed manner. The at least one processor may execute program instructions to fulfill or perform various functions.

The processor 1110 may record data in the memory 1120 or read out data stored in the memory 1120, and especially, execute the program or the at least one instruction stored in the memory 1120 to process data according to a predefined operation rule or Al model. The processor 1110 may control processing of input data according to a predefined operation rule, an algorithm, a method or a model stored in the memory 1120. The processor 1110 may control processing of input data based on data stored in the memory 1120. By using the input data, the processor 1110 may perform operations of the predefined operation rule, algorithm, method or model stored in the memory 1120.

The memory 1120 may be electrically connected to the processor 1110, and may store one or more modules, algorithms, operation rules, models, programs, instructions or data related to operations of the components included in the electronic device 1100. For example, the memory 1120 may store one or more modules, algorithms, operation rules, models, programs, instructions or data for processing and control of the processor 1110.

The memory 1120 may be configured with storage media or a combination of the storage media such as a flash memory, a hard disk, a multimedia card micro type memory, a card type memory (e.g., secure digital (SD) or extreme digital (XD) memory), a random access memory (RAM), a static RAM (SRAM), a read only memory (ROM), an electrically erasable programmable ROM (EEPROM), a programmable ROM (PROM), a magnetic memory, a magnetic disk, and an optical disk. The memory 1120 may not be separately present but integrated into the processor 1110. The memory 1120 may include a volatile memory, a non-volatile memory, or a combination of the volatile memory and the non-volatile memory. The memory 1120 may store a program or at least one instruction for performing operations according to the aforementioned embodiments. The memory 1120 may also provide the stored data to the processor 1110 at the request of the processor 1110.

In an embodiment of the present disclosure, the memory 1120 may store data or information identified, obtained, generated or determined by the electronic device 1100. The memory 1120 may store the data or information identified, obtained, generated or determined by the electronic device 1100.in a compressed format.

Some modules for performing at least one operation of the electronic device 1100 may be implemented as hardware modules, software modules and/or a combination thereof. The memory 1120 may include software modules for performing at least some of the aforementioned operations of the electronic device 1100. In an embodiment of the present disclosure, the modules included in the memory 1120 may be executed by the processor 1110 to perform operations. For example, the modules (i.e., the software modules) included in the memory 1120 may be executed under the control or instruction of the processor 1110, and may include programs, models or algorithms configured to perform operations to derive output data for input data. Some modules for performing at least one operation of the electronic device 1100 may be configured with a plurality of submodules or a single module.

The electronic device 1100 may include more components than those as shown in FIG. 11. In an embodiment of the present disclosure, the electronic device 1100 may further include a communication interface (or communication module) to communicate with an external device. In an embodiment of the present disclosure, the electronic device 1100 may further include an input/output device and/or an input/output interface.

In the present disclosure, overlapping descriptions in connection with FIGS. 1 to 11 may not be repeated, and the aforementioned one or more embodiments of FIGS. 1 to 11 may be applied/practiced in combination. In the present disclosure, an operation described as being performed by a module may be executed/performed by an electronic device that includes or stores the module, or executed/performed under the control of at least one processor of the electronic device that includes the module. An operation described as being performed by an electronic device may be executed/performed by a module included or stored in the electronic device, or performed under the control of at least one processor of the electronic device by using the module included or stored in the electronic device.

In an embodiment of the present disclosure, a method performed by an electronic device may include migrating a cell context for a target cell included in at least one of a radio link control (RLC) layer, a medium access control (MAC) layer or a physical (PHY) layer in a first distributed unit (DU) to at least one of an RLC layer, an MAC layer or a PHY layer in a second DU. In an embodiment of the present disclosure, the method may include configuring a connection between the RLC layer of the first DU and the MAC layer of the second DU for the target cell, and identifying that the target cell is in a state of being available for communication. In an embodiment of the present disclosure, the method may include migrating user equipment (UE) contexts for one or more target UEs among UE contexts for a plurality of UEs associated with the target cell, which are included in the RLC layer of the first DU, to the RLC layer of the second DU. In an embodiment of the present disclosure, the method may include switching an F1-U interface for the one or more target UEs to the second DU from the first DU, and configuring a connection between the RLC layer and the MAC layer in the second DU for the one or more target UEs.

According to an embodiment of the present disclosure, as communication is continued for the target cell in the first DU, there may be no time limit to migrating the cell context for the target cell, and thus, the target cell may be configured in the second DU without interrupting the communication service. According to an embodiment of the present disclosure, by migrating the UE context in the RLC layer and the F1-U path on a UE basis, operation stability may be secured, and system reliability may be improved.

In an embodiment of the present disclosure, the method may include switching the fronthaul interface for the target cell from the first DU to the second DU based on the migrating of the cell context for the target cell. According to an embodiment of the present disclosure, as two MAC schedulers use air resources (or radio resources) for one RU (or cell) without dividing the air resources and only one MAC is valid at one time, the complexity of MAC scheduling operations may be reduced. According to an embodiment of the present disclosure, the fronthaul interface may be prevented from communicating with two H-PHY layers. In other words, the fronthaul interface does not operate by being switched between two H-PHY layers, but may handle communication only for the second DU after being switched from the first DU to the second DU for a particular time. It may avoid a situation in which the fronthaul interface is connected to two H-PHY layers at the same time, and prevent the use of additional resources for packet distribution.

In an embodiment of the present disclosure, the method may include migrating the UE contexts for the plurality of UEs included in at least one of the MAC layer or PHY layer of the first DU to at least one of the MAC layer or PHY layer of the second DU based on the migrating of the cell context for the target cell.

In an embodiment of the present disclosure, the method may include removing the cell context for the target cell and the UE contexts for the plurality of UEs from at least one of the MAC layer or the PHY layer of the first DU based on identifying that the target cell is in a state of being available for communication.

In an embodiment of the present disclosure, the method may further include selecting one or more target UEs from among the plurality of UEs.

In an embodiment of the present disclosure, the method may further include removing UE contexts for the one or more target UEs from the RLC of the first DU based on migration of the UE contexts for the one or more target UEs.

In an embodiment of the present disclosure, the method may further include removing the cell context for the target cell from the RLC of the first DU based on completion of the migrating of the UE contexts for the plurality of UEs to the RLC of the second DU.

In an embodiment of the present disclosure, the method may further include identifying a determination of a scaling-out for the first DU.

In an embodiment of the present disclosure, based on the determining of the scaling-out for the first DU, the second DU may be generated and a midhaul interface may be configured between a centralized unit (CU) for the first DU and the second DU.

In an embodiment of the present disclosure, the method may further include identifying a determination of a scaling-in for the first DU.

In an embodiment of the present disclosure, a program for causing a computer to perform the method may be recorded on a computer-readable recording medium.

In an embodiment of the present disclosure, an electronic device may include a memory storing one or more instructions and at least one processor configured to execute the one or more instructions stored in the memory. In an embodiment of the present disclosure, the at least one processor may execute the one or more instructions to migrate a cell context for a target cell included in at least one of a radio link control (RLC) layer, a medium access control (MAC) layer or a physical (PHY) layer in a first distributed unit (DU) to at least one of an RLC layer, an MAC layer or a PHY layer in a second DU. In an embodiment of the present disclosure, the at least one processor may execute the one or more instructions to configure a connection between the RLC layer of the first DU and the MAC layer of the second DU for the target cell, and identify that the target cell is in a state of being available for communication. In an embodiment of the present disclosure, the at least one processor may execute the one or more instructions to migrate user equipment (UE) contexts for one or more target UEs among UE contexts for a plurality of UEs associated with the target cell, which are included in the RLC layer of the first DU, to the RLC layer of the second DU. In an embodiment of the present disclosure, the at least one processor may execute the one or more instructions to switch an F1-U interface for the one or more target UEs to the second DU from the first DU, and configure a connection between the RLC layer and the MAC layer in the second DU for the one or more target UEs.

In an embodiment of the present disclosure, the at least one processor may execute the one or more instructions to switch the fronthaul interface for the target cell from the first DU to the second DU based on the migrating of the cell context for the target cell.

In an embodiment of the present disclosure, the at least one processor may execute the one or more instructions to migrate the UE contexts for the plurality of UEs included in at least one of the MAC layer or PHY layer of the first DU to at least one of the MAC layer or PHY layer of the second DU based on the migrating of the cell context for the target cell.

In an embodiment of the present disclosure, the at least one processor may execute the one or more instructions to remove the cell context for the target cell and the UE contexts for the plurality of UEs from at least one of the MAC layer or the PHY layer of the first DU based on identifying that the target cell is in a state of being available for communication.

In an embodiment of the present disclosure, the at least one processor may execute the one or more instructions to select one or more target UEs from among the plurality of UEs.

In an embodiment of the present disclosure, the at least one processor may execute the one or more instructions to remove UE contexts for the one or more target UEs from the RLC of the first DU based on migration of the UE contexts for the one or more target UEs.

In an embodiment of the present disclosure, the at least one processor may execute the one or more instructions to remove the cell context for the target cell from the RLC of the first DU based on completion of the migrating of the UE contexts for the plurality of UEs to the RLC of the second DU.

In an embodiment of the present disclosure, the at least one processor may execute the one or more instructions to identify a determination of a scaling-out for the first DU. In an embodiment of the present disclosure, based on the determining of the scaling-out for the first DU, the second DU may be generated and a midhaul interface may be configured between a centralized unit (CU) for the first DU and the second DU.

In an embodiment of the present disclosure, a determination of a scaling-in for the first DU may be identified.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment, the aforementioned method according to the various embodiments of the disclosure may be provided in a computer program product. The computer program product may be a commercial product that may be traded between a seller and a buyer. The computer program product may be distributed in the form of a machine-readable storage medium (e.g., a CD-ROM) or distributed directly between two user devices (e.g., smart phones) or online (e.g., downloaded or uploaded). In the case of the online distribution, at least part of the computer program product (e.g., a downloadable app) may be at least temporarily stored or arbitrarily created in a storage medium that may be readable to a device such as a server of the manufacturer, a server of the application store, or a relay server.

## Claims

1. A method performed by an electronic device, the method comprising:
migrating a cell context for a target cell included in at least one of a radio link control (RLC) layer, a medium access control (MAC) layer or a physical (PHY) layer in a first distributed unit (DU) to at least one of an RLC layer, an MAC layer or a PHY layer in a second DU;
configuring a connection between the RLC layer of the first DU and the MAC layer of the second DU, for the target cell, and identifying that the target cell is in a state of being available for communication;
migrating user equipment (UE) contexts for one or more target UEs, among UE contexts for a plurality of UEs associated with the target cell and included in the RLC layer of the first DU, to the RLC layer of the second DU; and
switching an F1-U interface for the one or more target UEs to the second DU from the first DU, and configuring a connection between the RLC layer and the MAC layer in the second DU, for the one or more target UEs.

2. The method of claim 1, further comprising:
switching a fronthaul interface for the target cell from the first DU to the second DU, based on migration of a cell context for the target cell.

3. The method of claim 1 or 2, further comprising:
migrating UE contexts for the plurality of UEs included in at least one of the MAC layer or the PHY layer of the first DU to at least one of the MAC layer or the PHY layer of the second DU, based on the migration of the cell context for the target cell.

4. The method of any one of claims 1 to 3, further comprising:
removing the cell context for the target cell and the UE contexts for the plurality of UEs from at least one of the MAC layer or the PHY layer of the first DU, based on identifying that the target cell is in a state of being available for communication.

5. The method of any one of claims 1 to 4, further comprising:
selecting the one or more target UEs from among the plurality of UEs.

6. The method of any one of claims 1 to 5, further comprising:
removing the UE contexts for the one or more target UEs from the RLC of the first DU, based on migration of the UE contexts for the one or more target UEs.

7. The method of any one of claims 1 to 6, further comprising:
removing the cell context for the target cell from the RLC of the first DU, based on completion of migration of the UE contexts for the plurality of UEs to the RLC of the second DU.

8. The method of any one of claims 1 to 7, further comprising:
identifying a determination of a scaling-out for the first DU.

9. The method of any one of claims 1 to 8, further comprising:
based on the determination of the scaling-out for the first DU, generating the second DU and configuring a midhaul interface between the second DU and a centralized unit (CU) for the first DU.

10. The method of any one of claims 1 to 7, further comprising:
identifying a determination of a scaling-in for the first DU.

11. A computer-readable recording medium having a program recorded thereon to cause a computer to perform the method of any of claims 1 to 10.

12. An electronic device (1100) comprising:
memory (1120) storing one or more instructions; and
at least one processor (1110) configured to execute the one or more instructions stored in the memory (1120),
wherein the at least one processor (1110) is configured to execute the one or more instructions to
migrate a cell context for a target cell included in at least one of a radio link control (RLC) layer, a medium access control (MAC) layer or a physical (PHY) layer in a first distributed unit (DU) to at least one of an RLC layer, an MAC layer or a PHY layer in a second DU,
configure a connection between the RLC layer of the first DU and the MAC layer of the second DU, for the target cell, and identify that the target cell is in a state of being available for communication,
migrate user equipment (UE) contexts for one or more target UEs, among UE contexts for a plurality of UEs associated with the target cell and included in the RLC layer of the first DU, to the RLC layer of the second DU, and
switch an F1-U interface for the one or more target UEs from the first DU to the second DU, and configure a connection between the RLC layer and the MAC layer in the second DU, for the one or more target UEs.

13. The electronic device of claim 12, wherein the at least one processor (1110) is configured to switch a fronthaul interface for the target cell from the first DU to the second DU, based on migration of the cell context for the target cell.

14. The electronic device of claim 12 or 13, wherein the at least one processor (1110) is configured to migrate UE contexts for the plurality of UEs included in at least one of the MAC layer or PHY layer of the first DU to at least one of the MAC layer or PHY layer of the second DU, based on the migration of the cell context for the target cell.

15. The electronic device of any one of claims 12 to 14, wherein the at least one processor (1110) is configured to remove the cell context for the target cell and the UE contexts for the plurality of UEs from at least one of the MAC layer or the PHY layer of the first DU, based on identifying that the target cell is in a state of being available for communication.
